# EUROPÄISCHE PATENTANMELDUNG

(11) **EP 2 490 310 A2**
(43) Veröffentlichungstag der Anmeldung: **22.08.2012**
(21) Anmeldenummer: 12155680.7
(22) Anmeldetag: 15.02.2012
(51) Int. Cl.: H02G 3/04, H02G 9/02

(54) **Kabelführungssystem**

(30) Priorität: 17.02.2011 DE 102011011639
(71) Anmelder: Rüttiger, Maximillian, 83209 Prien (DE)
(72) Erfinder: Rüttiger, Maximillian, 83209 Prien (DE)
(74) Vertreter: Einsiedler, Johannes

(57) **Zusammenfassung**

Die Erfindung betrifft ein Kabelführungssystem (1) zur Aufnahme von zumindest einem Kabel, einem Schlauch und/oder einer Leitung, zumindest umfassend einen sich über eine Länge l erstreckenden starren Kabelkanal (2, 10) mit zumindest einer offenen Stirnseite und eine durch mehrere gelenkig verbundene Kettenglieder (11) gebildete flexible Leitungsführungskette (9, 9´, 9´´), das dadurch gekennzeichnet ist, dass ein erstes Kettenglied (8) der Leitungsführungskette (9, 9´, 9´´) oder eine Verteilerglied zur Vernetzung von Leitungsführungsketten mittelbar- oder unmittelbar an einer offenen Stirnseite des Kabelkanals (2, 10) angebracht ist.

## Beschreibung

Die Erfindung betrifft ein Kabelführungssystem zur Aufnahme von zumindest einem Kabel, einem Schlauch und/oder einer Leitung.

Starre Kabelkanäle, wie beispielsweise ebenerdig geführte Kabelbrücken oder entlang einer Wand geführte Fußbodenleistenkanäle, aber auch Brüstungskanäle, schützen Kabel, Schläuche, Leitungen oder dergleichen im Bereich der Verlege-, Geh- und/oder Fahrwegen. Gattungsgemäße Kabelbrücken sind z. B. aus der DE 197 07 689 oder der DE 101 10 568 bekannt.

Die bekannten Kabelkanäle sind ein- oder mehrteilig ausgeführt und weitestgehend starre Profilkörper, die die entsprechenden Leitungen in Kanälen aufnehmen, bündeln und einen Schutz der Leitungen gegen mechanische Beschädigung bieten. Fußbodenleistenkanäle und Brüstungskanäle sind in der Regel dauerhaft mit dem Untergrund verbunden, beispielsweise durch eine Schraub- oder Klebeverbindung; Kabelbrücken können hingegen auch lediglich verlegt sein, d.h., eine Bodenhaftung ist durch einen speziellen Materialverbund, hohes Eigengewicht und/oder geeignete Formgebung gewährleistet.

Bei Fußbodenleistenkanälen und Brüstungskanälen ist die äußere Kontur frei wählbar, bevorzugt sind diese Kanäle jedoch im Querschnitt rechteckig. Bei Kabelbrücken wird durch eine an der Oberseite konvexe Gestaltung des Querschnittes bei ordnungsgemäßer Verlegung ein stufenloser oder weitestgehend stufenloser Übergang zwischen der Oberseite des verlegten Profils und der Geh- bzw. Fahrfläche erreicht. Ein unbeabsichtigtes Ziehen oder Reißen an den Kabeln oder Leitungen durch, beispielsweise stolpernde Personen, wird dadurch verhindert.

Kabelkanäle gemäß dem Stand der Technik werden aus Kunststoff, beispielsweise PVC, oder Metall hergestellt, und gewährleisten eine der entsprechenden Belastung adäquate Festigkeit.

Handelsübliche starre Kabelkanäle haben zwei Stirnseiten für den Leitungsaustritt und erstrecken sich über eine Länge I. Bei klassischen Kabelbrücken entspricht die Länge I in der Regel der Breite eines Durchgangs oder einer Durchfahrt.

Änderungen in der Kabelführungsstrecke über Verteilereinrichtungen sind, aufgrund der starren Profilkörper der Kabelkanäle, bei Verwendung von 90° Winkelstücken nur im rechten Winkel möglich. Eine Verlegung mittels Gehrungsschnitten ist aufwändig und unflexibel. Da insbesondere in ältern Gebäuden die Wände nicht im rechten Winkel ausgerichtet sind, kommt es bei der Verlegung von Fußbodenleistenkanälen und Brüstungskanälen zu einer unerwünschten Fugenbildung, die nicht oder nur mit hohem Aufwand zu korrigieren ist.

Im Gegensatz zu den Kabelbrücken stehen die sog. flexiblen Kabelführungen zum Führen von Kabel, Schläuche, Leitungen oder dergleichen. Eine gattungsgemäße flexible Kabelführung ist beispielsweise in der DE 20 2004 011 695 U1 des Anmelders offenbart.

Flexible Kabelführungen, die auch unter dem Begriff Leitungsführungskette bekannt sind, werden von einer Vielzahl von nach Art einer Kette gelenkig miteinander verbundenen und jeweils praktisch in allen Richtungen gegeneinander abwinkelbaren stirnseitig offenen Gliedern gebildet.

Der Gliedermantel begrenzt zumindest einen Führungskanal für innerhalb der Kette zu führende Kabel etc.; jedes Glied kann Kupplungselemente umfassen, beispielsweise kardanische Gelenke, um eine Verbindung mit einem nachfolgenden und einem vorstehenden Glied auszubilden. Die Glieder können aber auch über ein Seil oder einen Gurt miteinander verbunden sein. Die flexible Ausführung gattungsgemäßer Kabelführungen hat den Vorteil, dass jede beliebige Kabelführungsstrecke darstellbar ist; nachteilig ist jedoch, bedingt durch die Vielzahl der Kettenglieder, eine verminderte Trittfestigkeit sowie Spalte zwischen den Kettengliedern, die eine Verletzungsgefahr und ein Heraustreten der Kabel bedingen können.

Aufgabe der vorliegenden Erfindung ist es ein Kabelführungssystem bereitzustellen, das im Bereich der Verlege-, Geh- und/oder Fahrwege einen optimalen Schutz für die Kabel gewährleistet und in einem Verbindungsbereich flexibel ausgeführt ist, so dass möglichst kurze, individuell führbare Kabelstrecken möglich sind.

Gelöst wird diese Aufgabe durch ein Kabelführungssystem zur Aufnahme von zumindest einem Kabel, einem Schlauch und/oder einer Leitung, zumindest umfassend einen sich über eine Länge I erstreckenden starren Kabelkanal mit zumindest einer offenen Stirnseite und eine durch mehrere gelenkig verbundene Kettenglieder gebildete flexible Leitungsführungskette, das dadurch gekennzeichnet ist, dass ein erstes Kettenglied der Leitungsführungskette oder ein Verteilerglied zur Vernetzung von Leitungsführungsketten mittelbar- oder unmittelbar an einer offenen Stirnseite des Kabelkanals angebracht ist.

Vorteilhafte Aus- und Weiterbildungen sind in den Unteransprüchen beschrieben.

Die erfinderische Kombination eines starren, sich über eine Länge I erstreckenden Kabelkanals und einer flexiblen Leitungsführungskette führt im Ergebnis zu einem flexiblen Kabelführungssystem, das sich im jeweiligen Abschnitt der Kabelführungsstrecke als für den spezifischen Einsatzzweck optimal angepasst erweist.

Erfindungswesentlich ist, dass an einer offenen Stirnseite eines starren Kabelkanals ein erstes Glied einer flexiblen Leitungsführungskette angebracht ist, wodurch beliebige Winkelstellungen und damit Kabelführungsstrecken darstellbar sind. Dadurch, dass sich die Erfindung bewusst abwendet von den typischen Verteilerbuchsen mit rechtwinkligen Anschlüssen für starre Kabelkanäle lassen sich außerhalb der bisher üblichen Verlege-Geh- und Fahrwege kurze Kabelführungsstrecken realisieren. Dies führt zu einer erheblichen Reduktion der Kabellängen und damit zu geringeren Kosten für eine Kabelführung. Zudem entfallen die Kosten für teure und aufwändig herzustellende Gehrungsschnitte und Winkelstücke.

Die Erfindung ist nicht beschränkt auf die Anbringung einer Leitungsführungskette, da beispielsweise nach dem ersten Glied oder anstelle des ersten Gliedes nach dem Kabelkanal ein Verteiler zur Vernetzung von Leitungsführungsketten vorgesehen werden kann. Gattungsgemäße Verteiler sind beispielsweise in der DE 199 63 119 A1 des Anmelders offenbart. Damit ist es möglich Kabelführungsstrecken in verschiedene Richtungen zu realisieren.

Erfindungsgemäß ist eine an einem dauerhaft mit dem Untergrund verbundenen Brüstungskanal oder Fußbodenleistenkanal mittel- oder unmittelbar daran anschließende flexible Leitungsführungskette vorgesehen. Dadurch ist es möglich eine flexible Verbindung zwischen einem ortsfesten Leitungsausgang und einem ortsbeweglichen Leitungseingang, beispielsweise für einen fahrbaren Verbraucher wie einen Schreibtisch mit Rollen oder einen Beamer etc. darzustellen. Damit kann im Umfang der Länge der Leitungsführungskette ein bewegliches Möbel etc. jede Position einnehmen. Durch eine axiale Verschiebbarkeit der Kettenglieder läßt sich die Länge der Leitungsführungskette in vorteilhafterweise variieren.

Erfindungsgemäß ist im Bereich eines Geh- und Fahrweges eine starre Kabelbrücke mit einer erhöhten Trittfestigkeit vorgesehen, und außerhalb dieses Bereichs, d.h. zwischen einer Anschlussbuchse und einem Durchgang oder einer Durchfahrt, mittel- oder unmittelbar daran anschließend eine flexible Leitungsführungskette. Die Leitungsführungskette dient dabei mehr der (Zusammen)Führung der Kabel etc. als dem Schutz vor einer Druck- oder Quetschbelastung.

Wenn die Kabelführungsstrecke und die zu verwendende Ausführungsform der Leitungsführungskette feststeht, kann es vorteilhaft sein, eine formschlüssige unmittelbare Verbindung, beispielsweise eine Schraubverbindung, zwischen der Stirnseite des Kabelkanals und erstem Kettenglied der Leitungsführungskette oder einem Verteilerglied auszubilden.

Alternativ zu dieser unmittelbaren Verbindung kann eine leicht herstellbare und lösbare Schnappverbindung, beispielsweise eine Kugelschnappverbindung, vorzugsweise mit kardanischer Bewegungsmöglichkeit, zwischen Kabelkanal und erstem Kettenglied ausgebildet sein. Demnach kann eine Stirnseite des Kabelkanals bereits mit der Aufnahmeeinrichtung einer für Leitungsführungsketten üblichen Schnappverbindung ausgestaltet sein, so dass ein erstes Glied einer flexiblen Leitungsführungskette einfach eingeschnappt wird. Mittelbar kann ein erstes Kettenglied an einer offenen Stirnseite des Kabelkanals beispielsweise über ein sich über Kabelkanal und Kette erstreckendes Zugseil angebracht sein.

Grundsätzlich kann an jede Kabelkanalform jede Form d.h. Außenkontur einer Leitungsführungskette anschließen, insoweit eine mittel- oder unmittelbare Verbindung zwischen dem ersten Kettenglied und einer offenen Stirnseite des Kabelkanals herstellbar ist. Um eine starre Kabelbrücke, die sich über eine Länge I erstreckt, an den Flanken mit erhöhter Trittfestigkeit auszustatten, kann es vorteilhaft sein, eine Leitungsführungskette zuminderst über einen bestimmten Bereich axial verschiebbar auszuführen. Durch ein Zusammenschieben der einzelnen Kettenglieder entsteht ein geschlossener Kabelkanal mit einer erhöhten Trittfestigkeit.

In einer besonders vorteilhaften Ausführungsform sind die Kettenglieder axial verschiebbar ausgeführt, beidseitig angeschrägt und/oder haben die gleiche oder zumindest eine ähnliche Außenkontur wie der starre Kabelkanal. Dadurch lässt sich im Bedarfsfall, beispielsweise wenn ein gleichmäßiges Überfahren der Kabelbrücke mit einem (über)breiten Gefährt erfolgen soll, ein beliebig verbreiterbarer, gleich gestalteter Übergang zwischen der Oberseite des erfindungsgemäßen Kabelführungssystems und der Geh- bzw. Fahrfläche herstellen.

In einer weiteren besonders vorteilhaften Ausführungsform ist im Gliedermantel der Kettenglieder wenigstens ein Schlitz, insbesondere ein Kabeleinführschlitz, ausgebildet, um die aus dem Kabelkanal austretenden Kabel, Schläuche etc. in den zumindest einen Führungskanal der Leitungsführungskette neben dem stirnseitigen Einführen auch längsgeführt einlegen zu können. In vorteilhafterweise fluchtet der Schlitz mit dem Kanal des Kabelkanals, was ein einfaches lineares Einlegen oder Einclipsen der aus dem Kanal des Kabelkanals austretenden Kabel ermöglich.

Neben einer axialen Verschiebbarkeit der Kettenglieder kann es zur Zugentlastung vorteilhaft sein, ein Zugseil über die gesamte Länge des erfindungsgemäßen Kabelführungssystems zu führen.

Eine Kabelbrücke des erfindungsgemäßen Kabelführungssystems ist einer steten Tritt-und/oder Fahrbelastung ausgesetzt. Dies kann dazu führen, dass die Kabelbrücke im Laufe der Zeit aus ihrer ursprünglichen Position heraus verschoben wird. In einer bevorzugten Ausführungsform weist daher das Kabelführungssystem zumindest im Bereich der Unterseite der Kabelbrücke eine Befestigungsvorrichtung auf, die dazu geeignet ist, der Brücke gegebenenfalls eine dauerhafte Bodenhaftung, beispielsweise durch eine Klebe- Klett- und/oder Schraubverbindung, zu verleihen.

Besonders bevorzugt ist es, ein Hakenband an der Unterseite der Brücke vorzusehen, das in Wirkverbindung mit einem Teppichboden stehen kann. Wenn die Unterseite der Brücke eine Ausnehmung aufweist, die dazu geeignet ist ein Hakenband dergestalt aufzunehmen, dass nur die Haken vortreten, lässt sich zudem sowohl eine zusätzliche Stufe an der Brücke vermeiden als auch ein planer Übergang von Brücke zu erstem Kettenglied herstellen.

Um ein unbeabsichtigtes Hervortreten der Kabel etc. nach einer Verlegung eines Kabelkanals mit an der Unterseite offenem Führungskanal zu vermeiden, ist es vorteilhaft die zumindest eine Kabeleinführöffnung längs der Unterseite zumindest abschnittweise zu verschließen. Grundsätzlich sind hierfür alle gängigen Verschlusseinrichtungen, wie beispielsweise angelenkte oder eingeclipste Deckel, gummielastische Kunststoffstreifen, Clips, Plättchen oder dergleichen geeignet. Besonders bevorzugt wird die zumindest eine Kabeleinführöffnung des Kabelkanals jedoch durch einen in eine Führung einschiebbaren Streifen aus Kunststoff oder Metall verschlossen, da sich ein derartiger Verschluss nicht nur als kostengünstig sondern auch als am haltbarsten erweist. Die an der Unterseite der Brücke ausgebildete Führung respektive der Streifen erstreckt sich bevorzugt über die Länge I des Kabelkanals an dessen Unterseite.

Weitere Merkmale und Weiterbildungen ergeben sich aus der nachfolgenden Beschreibung der Ausführungsbeispiele unter Bezugnahme auf die beiliegenden Zeichnungen.

Es zeigen:
- Fig. 1: eine perspektivische Ansicht einer Kabelbrücke,
- Fig. 2: ein Kabelführungssystem mit einem Kabelkanal und einer Leitungsführungskette,
- Fig. 3: ein Kabelführungssystem mit einer Kabelbrücke und unterschiedlichen Leitungsführungskette und
- Fig. 4: ein Kabelführungssystem mit einer Kabelbrücke und einer Leitungsführungskette.

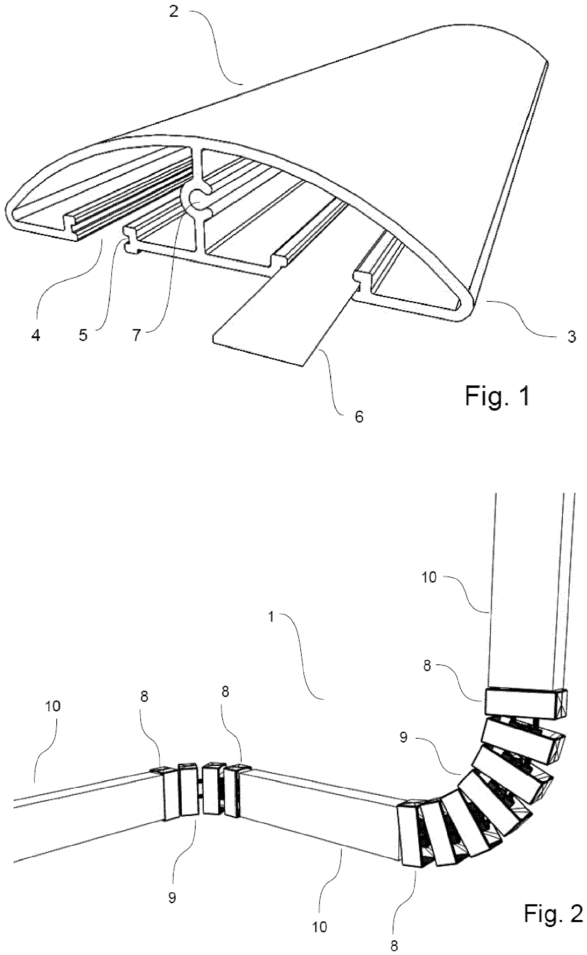

Figur 1 zeigt eine Kabelbrücke (2) als Teil eines erfindungsgemäßen Kabelführungssystems (1). Die konvexe Gestaltung des Querschnittes (3) gewährleistet einen weitestgehend stufenlosen Übergang zwischen der Oberseite Profils und einer Geh- bzw. Fahrfläche. Die Kabeleinführöffnung (4) an der Unterseite der Kabelbrücke (2) ist mittels eines in eine Führung (5) einschiebbaren Streifens (6) aus Kunststoff oder Metall verschließbar. An einem Loch (7), das als Rundloch oder wie abgebildet als C-Loch ausgeführt sein kann, kann beispielsweise mittels einer selbstschneidenden Schraube ein erstes Glied (8) einer Leitungsführungskette (9) (vgl. Fig. 2) oder ein Verteiler zur Vernetzung von Leitungsführungsketten unmittelbar befestigt werden. Selbstverständlich ist es auch möglich, ein Seil oder eine Stange durch das Loch (7) und die Leitungsführungskette zu führen, und beispielsweise mittels einer Seilklemme eine mittelbare Verbindung herzustellen. Über das Loch (7) lässt sich eine besonders stabile Verbindung zwischen einem ersten Glied (8) einer Leitungsführungskette und einem Kabelkanal (2, 10) herstellen.

Fig. 2 zeigt ein Kabelführungssystem (1), bestehend aus drei Brüstungskanälen (10), die über zwei Leitungsführungsketten (9) mit einem rechteckigen Querschnitt flexibel verbunden sind. An den offenen Stirnseiten der starren Brüstungskanälen (10) sind erste Glieder (8) der flexiblen Leitungsführungskette (9) angebracht ist, wodurch beliebige Winkelstellungen und damit Kabelführungsstrecken darstellbar.

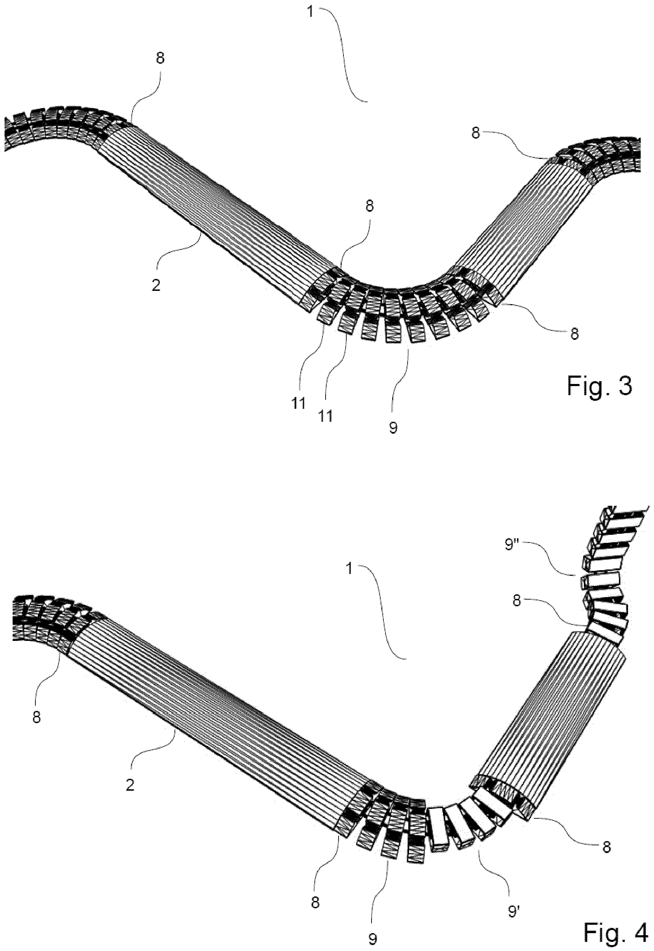

Die Figur 3 zeigt ein Kabelführungssystem (1) mit einer starren, konvex geformten Kabelbrücke (2) an deren Stirnseiten unmittelbar erste Glieder (8) einer flexiblen Leitungsführungskette (9) angebracht sind. Die Kettenglieder (11) haben die gleiche Außenkontur wie die starre Kabelbrücke (2), was gegebenenfalls ein gleichmäßiges Überfahren der Kabelbrücke (2) erlaubt.

Gemäß der Figur 4 ist es auch möglich starre Kabelkanäle, hier am Beispiel einer Kabelbrücke gezeigt, mit unterschiedlichen Arten von Leitungsführungsketten (9, 9', 9") zu kombinieren. Ausschlaggebend ist lediglich die mittel- oder unmittelbare Verbindung zwischen Kabelkanal und einem ersten Glied (8) einer Leitungsführungskette (9).

Mit dem erfindungsgemäßen Kabelführungssystem können beliebige Winkel in einer Kabelführung dargestellt werden. Die erlaubt kurze Kabelführungsstrecken und damit eine Kosteneinsparung. Das System eignet sich für Büroräume und insbesondere für Großraumbüros.

## Patentansprüche

1. Kabelführungssystem (1) zur Aufnahme von zumindest einem Kabel, einem Schlauch und/oder einer Leitung, zumindest umfassend einen sich über eine Länge I erstreckenden starren Kabelkanal (2, 10) mit zumindest einer offenen Stirnseite und eine durch mehrere gelenkig verbundene Kettenglieder (11) gebildete flexible Leitungsführungskette (9, 9', 9"), **dadurch gekennzeichnet, dass** ein erstes Kettenglied (8) der Leitungsführungskette (9, 9', 9") oder ein Verteilerglied zur Vernetzung von Leitungsführungsketten mittelbar- oder unmittelbar an einer offenen Stirnseite des Kabelkanals (2, 10) angebracht ist.

2. Kabelführungssystem nach Anspruch 1, **dadurch gekennzeichnet, dass** an beiden Stirnseiten des Kabelkanals (2, 10) erste Kettenglieder (8) mittelbar- oder unmittelbar angebracht sind.

3. Kabelführungssystem nach Anspruch 1 oder 2, **gekennzeichnet durch** eine wechselnde Abfolge von Kabelkanälen (2, 10) und Leitungsführungsketten (9, 9', 9").

4. Kabelführungssystem nach einem der Ansprüche 1 bis 3, **dadurch gekennzeichnet, dass** die Kettenglieder der Leitungsführungskette (9) axial verschieblich sind.

5. Kabelführungssystem nach einem der Ansprüche 1 bis 4, **dadurch gekennzeichnet, dass** die Kettenglieder der Leitungsführungskette (9, 9', 9") beidseitig angeschrägt sind und/oder die gleiche oder zumindest eine ähnliche Außenkontur wie der starre Kabelkanal (2, 10) aufweisen.

6. Kabelführungssystem nach einem der Ansprüche 1 bis 5, **gekennzeichnet durch** ein Hakenband in einer Ausnehmung an der Unterseite eines Kabelkanals (2, 10).

7. Kabelführungssystem nach einem der vorstehenden Ansprüche, **dadurch gekennzeichnet, dass** eine Kabeleinführung (4) an der Unterseite des Kabelkanals (2, 10) durch einen in eine Führung (5) einschiebbaren Streifen (6) zumindest abschnittsweise verschlossen ist.

8. Kabelführungssystem nach einem der Ansprüche 1 bis 6, **dadurch gekennzeichnet, dass** eine Kabeleinführung (4) an der Unterseite des Kabelkanals (2, 10) durch einen angelenkten oder eingeclipste Deckel, elastischen Kunststoffstreifen, Clips oder Plättchen zumindest abschnittsweise verschlossen ist.

9. Kabelführungssystem nach einem der vorstehenden Ansprüche, **dadurch gekennzeichnet, dass** das erste Glied (8) der flexiblen Leitungsführungskette (9, 9', 9") um die Längsachse des Kabelkanals (2, 10) drehbar gelagert ist.

10. Kabelführungssystem nach einem der vorstehenden Ansprüche, **dadurch gekennzeichnet, dass** das erste Glied (8) der flexiblen Leitungsführungskette (9, 9', 9") über ein Loch (7) mittels einer Schraubverbindung unmittelbar oder mittels einer Seilklemme mittelbar verbunden ist.

11. Kabelführungssystem nach einem der vorstehenden Ansprüche, **dadurch gekennzeichnet, dass** im Gliedermantel der Kettenglieder ein mit dem Kanal des Kabelkanals fluchtender Schlitz ausgebildet ist.
